# EUROPEAN PATENT APPLICATION

(11) **EP 2 249 184 A1**
(43) Date of publication of application: **10.11.2010**
(21) Application number: 10160911.3
(22) Date of filing: 23.04.2010
(51) Int. Cl.: G01V 1/38

(54) **Method and system for passive acoustic monitoring in seismic survey operations**

(30) Priority: 01.05.2009 US 387416
(71) Applicant: PGS Geophysical AS, 1366 Lysaker (NO)
(72) Inventor: Gubin, Dennis, 1450, Nesoddtangen (NO); Hedgeland, David, Brighton, BN1 6RD (GB); Rypdal, Trygve Cato, N-1385, Asker (NO); Vageskar, Erling, 6065, Ulsteinvik (NO)
(74) Representative: Skone James, Robert Edmund

(57) **Abstract**

A system for passive acoustic monitoring in connection with seismic surveying includes a survey vessel (10) having a recording system thereon. At least one seismic energy source (24) is coupled to the vessel (10) by a first towing cable (35). The towing cable (35) includes at least one conductor therein. At least one seismic sensor streamer (20) is coupled to the vessel by a lead in cable. At least one acoustic sensor (28) is coupled to the at least one source by a second towing cable (26). The second towing cable (26) includes at least one signal conductor configured to transmit signals from the acoustic sensor to the at least one conductor in the first towing cable. The at least one acoustic sensor (28) is configured to detect marine mammal vocalization.

## Description

### Field of the Invention

The invention relates generally to the field of seismic surveying. More particularly, the invention relates to devices and methods for detecting the presence of marine life that may be adversely affected by seismic survey operations.

### Background Art

Authorities in some jurisdictions require seismic survey operators to verify that no marine mammals are present within a certain distance from seismic exploration vessels before seismic survey work can start. Use of towed passive acoustic monitoring ("PAM") equipment is one way to perform such verification. A good description of techniques known in the art for PAM may be found in John R. Potter et al., Visual and Passive Acoustic Marine Mammal Observations and HighFrequency, IEEE Journal of Oceanic Engineering, vol. 32, no. 2, April, 2007.

Towed PAM equipment includes cables having hydrophones thereon that need to be deployed in the body of water for which verification is to be performed. As explained in the Potter et al. publication referred to above, the cables are deployed from a seismic survey vessel entirely separately from seismic signal acquisition equipment deployed in the water from the same vessel. Such acquisition equipment may include one or more seismic source arrays, and one or more seismic sensing streamers. The cables often interfere with the seismic equipment deployed in the water, which can lead to lost operational time and/or damaged equipment.

There is a need for improved methods and devices for passive acoustic monitoring that can be used with seismic survey systems.

### Summary of the Invention

A system according to one aspect of the invention for passive acoustic monitoring in connection with seismic surveying includes a survey vessel having a recording system thereon. At least one seismic energy source is coupled to the vessel by a first towing cable. The towing cable includes at least one conductor therein. At least one seismic sensor streamer is coupled to the vessel by a lead in cable. At least one acoustic sensor is coupled to the at least one source by a second towing cable. The second towing cable includes at least one signal conductor configured to transmit signals from the acoustic sensor to the at least one conductor in the first towing cable.

A method for passive acoustic monitoring in connection with seismic surveying according to another aspect of the invention includes towing at least one seismic energy source behind a survey vessel. At least one seismic sensor streamer is towed behind the vessel. At least one acoustic sensor is towed behind the at least one seismic energy source. The at least one acoustic sensor is configured to detect marine mammal vocalization.

Other aspects and advantages of the invention will be apparent from the following description and the appended claims.

### Brief Description of the Drawings

FIG. 1 shows prior art PAM devices used with a seismic acquisition system.

FIG. 2 shows an example PAM devices according to the invention.

FIG. 3 shows a cross section view of a PAM hydrophone array and seismic air gun array according to the invention.

FIG. 4 shows a detailed cross section of an example PAM hydrophone array and a source umbilical cable.

### Detailed Description

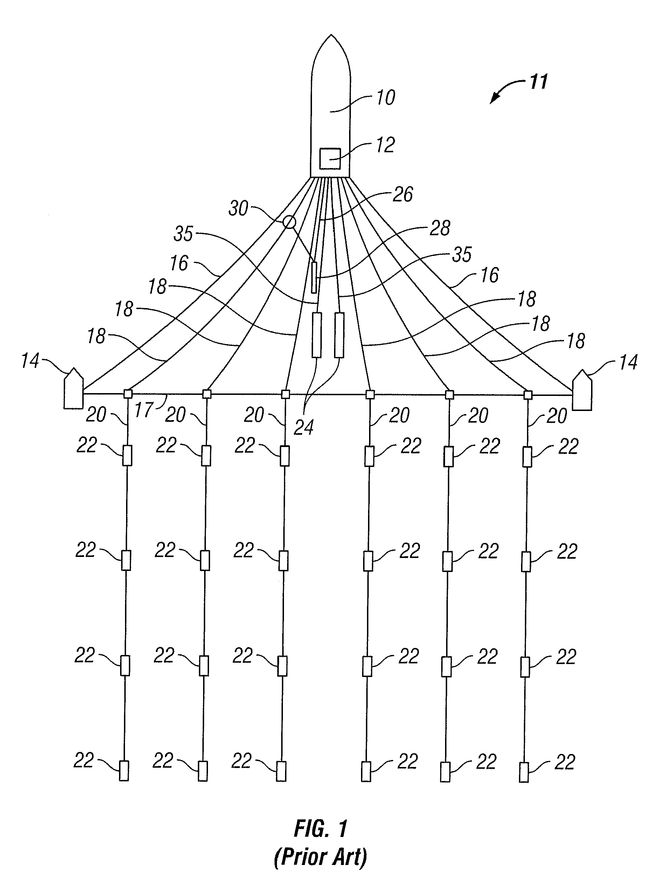

An example passive acoustic monitoring ("PAM") system known in the art, used in conjunction with seismic surveying systems and as described in John R. Potter et al., Visual and Passive Acoustic Marine Mammal Observations and HighFrequency, IEEE Journal of Oceanic Engineering, vol. 32, no. 2, April, 2007, is shown in plan view in FIG. 1 to help explain differences between PAM systems known in the art and PAM devices according to the invention.

A seismic survey vessel 10 moves along the surface of a body of water 11 in which seismic surveying is to be performed and in which it is desired to confirm the presence of marine mammals prior to surveying. The survey vessel 10 includes thereon certain equipment shown generally at 12 and referred to for convenience as a "recording system." The recording system 12 includes devices (none shown separately for clarity of the illustration) for determining geodetic position of the survey vessel 10, for actuating one or more seismic energy sources 24 (explained below) at selected times, for determining geodetic position of each of a plurality of seismic sensors 22 (explained below) and for recording the signals generated by the seismic sensors 22. The recording system 12 may also include equipment for detecting signals produced by a PAM sensor array 28 and for analyzing such signals to determine the presence of marine mammals in the survey area. Programs that may be installed in a computer (not shown) in the recording 12 system for determining whether acoustic energy detected by the PAM array 28 corresponds to marine mammal vocalization are described in the Potter et al. Publication referenced above.

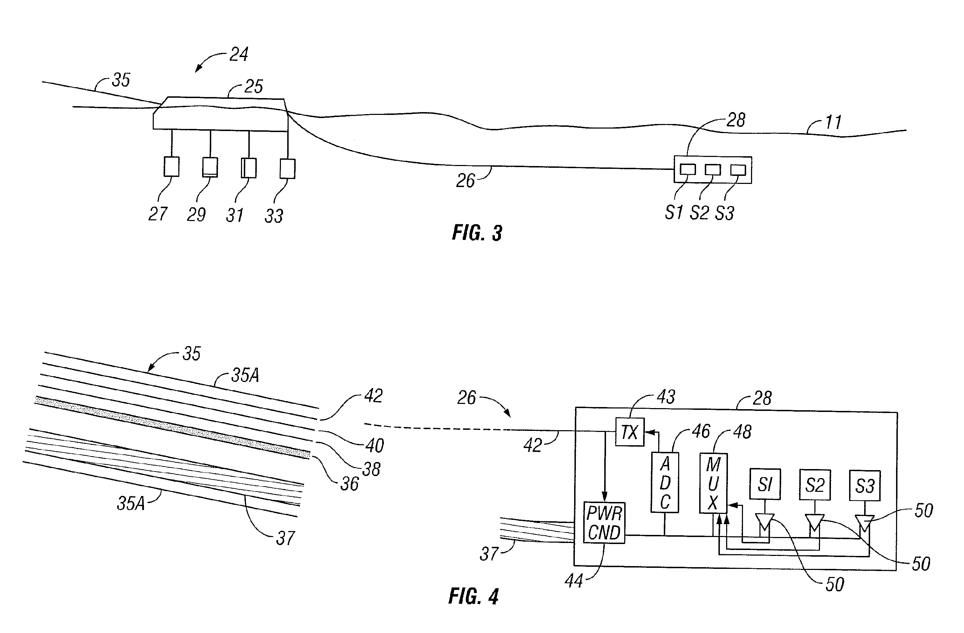

The seismic energy sources 24 are coupled to the survey vessel 10 by umbilical cables 35, explained below in more detail with reference to FIG. 4. The PAM sensor array 28 may be coupled to the survey vessel 10 by a towing cable 26, and is spaced laterally from the centerline of the survey vessel 10 using a running block 30 disposed on an outer "lead in" cable 18 (explained below).

The seismic sensors 22 are generally part of cables called "streamers" 20 and are disposed at longitudinally spaced apart locations along each of the streamers 20. The streamers 20 are towed generally behind the survey vessel 10, and are maintained at selected lateral distances with respect to the centerline of the survey vessel 10 using certain towing equipment. The towing equipment includes "super wide" towing ropes 16 at laterally outermost positions therein. At the longitudinal end of each super wide rope 16, a paravane 14 is coupled thereto and provides lateral outward deflecting force in response to movement of the towing equipment along the direction of motion of the survey vessel 10. A spreader cable 17 is coupled laterally between the paravanes 14 to maintain a selected maximum lateral distance therebetween. Lead in cables 18 extend behind the vessel 10 longitudinally to the forward end of each streamer 20, and provide electrical power and electrical and/or optical signal channels to communicate signals from the seismic sensors 22 to the recording system 12.

It has been observed that the arrangement shown in FIG. 1 is susceptible to tangling of the PAM array 28 and its towing cable 26 in, among other components, the lead in cables 18 and possible damage thereto.

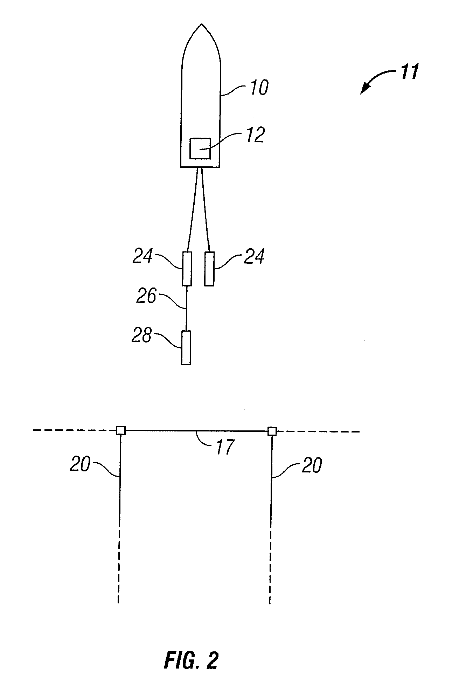

FIG. 2 shows a plan view of relevant parts of a PAM array coupled to the seismic acquisition system according to the invention. In FIG. 2, the PAM array 28 may be coupled by its towing cable 26 to an aft end of one of the seismic energy sources 24. The length of the PAM array towing cable 26 may be selected such that the PAM array 28 is disposed longitudinally ahead of the spreader cable 17.

The arrangement of FIG. 2 is shown in more detailed cross section view in FIG. 3. The seismic energy source 24 may comprise a plurality of, for example, seismic air guns 27, 29, 31, 33. An example of a seismic air gun that may be used with the present system is described U.S. Patent No. 4,472,794 issued to Chelminski, however the type of air gun is not a limit on the scope of the present invention. The seismic air guns are typically each configured to have particular energy spectral content when the entire group of guns is actuated in a selected sequence. The seismic energy source 24 may alternatively include water guns (not shown). Generally, although not exclusively, the seismic energy source 24 may be a so-called "impulsive" source, that is, one in which most of the energy emitted in each actuation thereof occurs in a single impulse of relatively short duration. It is impulsive sources that are believed to create the most risk to marine life. However, the actual type of seismic energy source used in any particular example is not a limitation on the scope of the present invention. It is contemplated that the present invention may also be used with marine vibrators and other so called "spread-spectrum" seismic energy sources. The seismic air guns 27, 29, 31, 33 are each suspended at a selected depth in the water 11 from a float 25 that is coupled to the vessel (10 in FIG. 2) by the umbilical cable 35. Preferably, the PAM array towing cable 26 is coupled to a structural part of the float 25 to transmit axial loading to the umbilical cable 35. As will be explained below with reference to FIG. 4, the umbilical cable 35 includes structural elements to transmit axial loading to the vessel (10 in FIG. 2). The PAM array 28 may include a plurality of hydrophones S1, S2, S3. Examples of hydrophones that may be used with the present system are described in the above referenced Potter et al. Publication.

A more detailed cross section view of the umbilical cable 35 and the PAM array 28 are shown in FIG. 4. An example configuration for the PAM array 28 is described in the Potter et al. publication referred to above. The PAM array 28 may have, for example, three (as shown at S1, S2, S3) or four hydrophones at various longitudinal separations, for example, from 5 to 50 meters. The output of each hydrophone S1, S2, S3 may be coupled to the input of a respective preamplifier 50. The output of each preamplifier 50 may be coupled to a multiplexer 48, the output of which may be coupled to an analog to digital converter (ADC) 46. The ADC 46 should be operated to sufficiently sample the highest expected marine mammal vocalization frequency without aliasing, e.g., about 22 KHz, thus a minimum sample frequency of 44 KHz. The hydrophones S1, S2, S3 can have a sensitivity of 201 dBV re 1 µPa. The hydrophones may be spectrally flat to within 1.5 dB over 1 Hz-15 kHz.

The umbilical cable 35 may include an outer, waterproof jacket 35A. Components of the umbilical cable 35 disposed inside the jacket may include one or more strength members 37 such as may be made from wire rope or cable, or from fiber rope, such as made from a fiber sold under the trademark VECTRAN, which is a registered trademark of Hoescht Celanaese Corp., NY, NY. The umbilical cable 35 may also include a compressed air or gas charge conduit 36 to supply compressed gas or air to the air guns (27, 29, 31 and 33 in FIG. 3) and plurality of twisted pairs of insulated electrical conductors 38, 40, 42. The twisted pairs 38, 40, 42 may provide an electrical actuating signal to operate each of the air guns ((27, 29, 31 and 33 in FIG. 3) at the selected times. One of the twisted pairs 42 may be extended into the PAM towing cable used to provide electrical power to the PAM array 28 and to conduct digitized signals from the PAM array 28 to the recording unit (12 in FIG. 2). To perform the latter two functions, the twisted pair 42 may be electrically coupled to a power conditioner 44 in the PAM array 28. A signal transceiver 43 may be coupled between the output of the ADC 46 and the twisted pair 42. Other examples may use separate electrical conductors for signal communication and power transmission. The PAM towing cable 26 may include an extension of the strength member(s) 37 to transmit axial loading to the float (25 in FIG. 3) and ultimately to the vessel (10 in FIG. 2).

The present example, in which signals from the hydropohones are digitized proximate thereto and are communicated in digital electrical form over one or more electrical conductors is only one example of communication of the hydrophone signals to the recording system (12 in FIG. 1). It is within the scope of the present invention to transmit the hydrophone signals as analog voltages along one or more electrical conductors in the umbilical cable 35. It is also within the scope of the present invention to use optical hydrophones and optical fibers to communicate the hydrophone signals to the recording unit. See, for example, U.S. Patent No. 7,154,082 issued to Maas and commonly owned with the present invention.

The number of seismic energy sources, streamers, lead in cables and other parts of the towing equipment shown in FIGS. 2, 3 and 4 are only provided herein as examples of seismic acquisition systems that may be used in accordance with the invention. Accordingly, the numbers of and the arrangement of such components shown and described herein are not limitations on the scope of the present invention.

Arrangements of PAM arrays and seismic acquisition devices according to the various aspects of the invention may reduce entanglement of the PAM array with the seismic acquisition devices, thus reducing non-operating time and possible damage to the seismic devices and/or PAM arrays.

## Claims

1. A method for passive acoustic monitoring in connection with seismic surveying, comprising:
towing at least one seismic energy source behind a survey vessel;
towing at least one seismic sensor streamer behind the vessel; and
towing at least one acoustic sensor behind the at least one seismic energy source, the at least one acoustic sensor configured to detect marine mammal vocalization.

2. The method of claim 1, further comprising conducting signals generated by the at least one acoustic sensor to a recording device on the vessel using a conductor disposed in a cable extending between the at least one source and the vessel.

3. The method of claim 1 or claim 2, further comprising conducting electrical power from a device on the vessel to electronic devices associated with the at least one acoustic sensor using a conductor disposed in a cable extending between the at least one source and the vessel.

4. The method of any of the preceding claims, further comprising digitizing signals generated by the at least one acoustic sensor at a location proximate the at least one acoustic sensor and transmitting the digitized signals to a recording device on the vessel using a conductor disposed in a cable extending between the at least one source and the vessel.

5. A system for passive acoustic monitoring in connection with seismic surveying, comprising:
a survey vessel having a recording system thereon;
at least one seismic energy source coupled to the vessel by a first towing cable, the towing cable including at least one conductor therein;
at least one seismic sensor streamer coupled to the vessel by a lead in cable; and'
at least one acoustic sensor coupled to the at least one source by a second towing cable, the second towing cable including at least one signal conductor configured to transmit signals from the acoustic sensor to the at least one conductor in the first towing cable, the at least one acoustic sensor configured to detect marine mammal vocalization.

6. The system of claim 5, further comprising a preamplifier proximate the acoustic sensor and coupled at its signal input to a signal output of the acoustic sensor, and an analog to digital converter coupled at a signal input thereof to a signal output of the preamplifier, wherein the at least one conductor in the second towing cable provides electrical power to operate the preamplifier and the converter, wherein the at least one conductor in the second towing cable communicates an output of the converter to a recording unit on the vessel.
